# EUROPEAN PATENT APPLICATION

(11) **EP 4 807 669 A1**
(43) Date of publication of application: **16.09.2026**
(21) Application number: 26158970.9
(22) Date of filing: 17.02.2026
(51) Int. Cl.: G06T 7/00

(54) **METHOD FOR DETECTING A CRACK IN AT LEAST ONE PART OF BRAKE DISC, CORRESPONDING SYSTEM AND METHODS FOR TRAINING A SUPERVISED LEARNING MODEL**

(30) Priority: 10.03.2025 IT 202500004896
(71) Applicant: Poli S.r.l., 26010 Camisano (CR) (IT); Gabber SAS, 77000 Melun (FR)
(72) Inventor: CREMONA, Marco, 26019 Vailate (IT); RUDILOSSO, Marco, 20137 Milano (IT); BOUTEILLE, Jean-Philippe, 60150 Le Plessis-Brion (FR); VOGT, Rodolph, 77000 Melun (FR); TAVARES, David, 93250 Villemomble (FR); ZARKOVIC, Danijel, 77177 Brou-sur-Chantereine (FR)
(74) Representative: Emmi, Mario

(57) **Abstract**

A method for detecting a crack in at least one part of brake disc is described, comprising the steps of:
a) receiving a plurality of images relating to respective portions of a braking surface of at least one part of brake disc;
b) for each image of said plurality of images, using a first supervised learning model, detecting the presence of at least one sub-area of adjacent pixels (A) indicative of the presence of a crack;

The first supervised learning model is trained using a set of training data each comprising:
- a first training image relating to a portion of braking surface of at least one part of brake disc having at least one crack;
- a second training image in which it is marked at least one sub-area of training pixels indicative of the at least one crack present in the portion of braking surface shown in the first training image, or identification data that allows the identification of at least one sub-area of training pixels indicative of the at least one crack in said portion of braking surface shown in the first training image.

A system (100) for detecting a crack and methods for training supervised learning models are also described.

## Description

### Technical sector

The present invention relates generally to the sector of brake discs; in particular, the invention refers to a method for detecting a crack in at least one part of brake disc, a system for detecting a crack in at least one part of brake disc, and methods for training a supervised learning model.

### Prior art

Some parts of the following are described with particular reference to the railway vehicle sector, however, they may also find similar application for vehicles in other sectors.

A braking disc (also called a brake disc) is an essential component of a vehicle braking system. A successful braking action requires the disc to be in an optimal condition to withstand the high thermal/mechanical loads that are generated during this braking action.

In order to ensure that the disc is in an optimal condition, it is necessary to identify the presence of any cracks in the disc, so that the disc can be promptly replaced, if the detected crack (also called crevice) is critical to the point of needing the replacement of the disc. Periodic monitoring of the condition of the discs helps to ensure the reliability of the braking system.

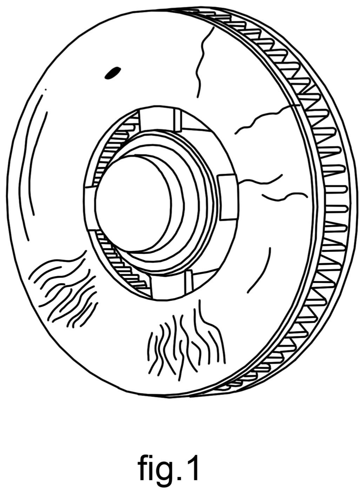

Figure 1 illustrates by way of example a brake disc that shows various types of possible cracks, including a single crack, a crack that extends up to an edge of the disc and clusters of cracks.

Usually, this investigation to verify the presence of cracks in a brake disc is carried out manually by an operator. In particular, the operator must go near a vehicle and visually analyse each disc of that vehicle in order to identify possible cracks.

Disadvantageously, since this verification is carried out manually, it takes a long time to carry out. The verification times are further lengthened when it is necessary to verify the condition of discs belonging to railway trains composed of a plurality of railway vehicles.

In addition, some cracks could have small dimensions that are difficult to detect by a verification carried out with the human eye.

### Summary of the invention

An object of the present invention is therefore to provide technical solutions for detecting cracks in at least one part of brake disc, which replace the known manual verification methods, resulting in:
- reduction of the time required to carry out the verification;
- increase in the reliability in detecting a crack in a brake disc.

The above and other objects and advantages are achieved:
- according to an aspect of the invention, by a method for detecting a crack in at least one part of brake disc having the characteristics defined in claim 1;
- according to a further aspect of the invention, by a system for detecting a crack in at least one part of brake disc having the characteristics defined in claim 6;
- according to still further aspects of the invention, by computer-implemented methods for training a supervised learning model defined, respectively, in claims 13 and 14.

Preferred embodiments of the invention are defined in the dependent claims, the content of which is to be understood as an integral part of this description.

### Brief description of the drawings

Functional and structural features of some preferred embodiments of a method for detecting a crack in a brake disc, a corresponding system and computer-implemented methods for training a supervised learning model according to the invention will now be described. Reference is made to the appended drawings, wherein:
- figure 1 illustrates an exemplary brake disc showing various types of possible cracks;
- figure 2 illustrates an exemplary image relating to a respective portion of a braking surface of at least one part of brake disc;

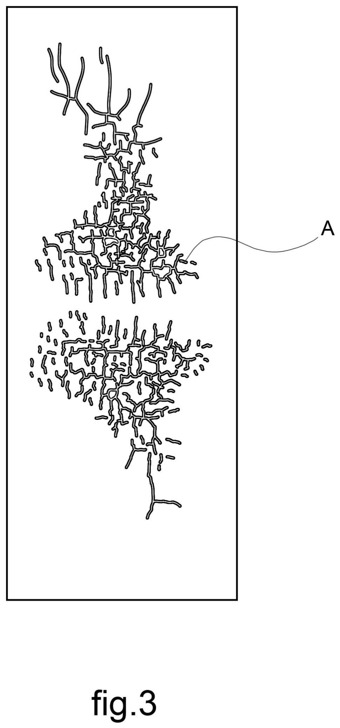

- figure 3 illustrates an exemplary image relating to a respective portion of a braking surface of at least one part of brake disc in which sub-areas of adjacent pixels A indicative of the presence of a crack have been identified;
- figure 4 illustrates an image showing an exemplary crack reaching a fixing hole of at least one part of brake disc;
- figure 5 illustrates a possible embodiment of a system for detecting a crack in at least one part of brake disc;
   figure 6 illustrates an exemplary portable device to which an arm for coupling to a vehicle is coupled.

### Detailed description

Before explaining in detail a plurality of embodiments of the invention, it should be clarified that the invention is not limited in its application to the construction details and to the configuration of the components provided in the following description or illustrated in the drawings. The invention may assume other embodiments and may be implemented or achieved in essentially different ways. It should also be understood that the phraseology and terminology have descriptive purposes and should not be construed as limiting. The use of "include" and "comprise" and their variations are to be understood as including the elements enunciated below and their equivalents, as well as additional elements and equivalents thereof.

A first embodiment of a method for detecting a crack in at least one part of brake disc is described below.

The method for detecting a crack in at least one part of brake disc comprises the steps of:
a) receiving a plurality of images relating to respective portions of a braking surface of at least one part of brake disc;
b) for each image of said plurality of images, using a first supervised learning model, detecting the presence of at least one sub-area of adjacent pixels A indicative of the presence of a crack;
For example, the at least one part of brake disc may comprise the entire braking surface of a unitary brake disc. In a unitary brake disc, the braking surface can be made in one piece from a single element.

In a further example, the at least one part of brake disc may comprise a braking surface of a segment of a segmented brake disc. In a segmented brake disc, the overall braking surface of the brake disc can thus be obtained by joining the braking surfaces respectively made on the various segments of the brake disc.

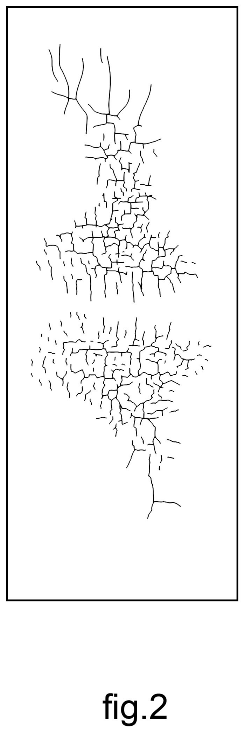

An exemplary image relating to a respective portion of a braking surface of at least one part of brake disc is illustrated in Figure 2.

The first supervised learning model is trained using a set of training data. Each training data comprises:
- a first training image relating to a portion of braking surface of at least one part of brake disc having at least one crack;
- a second training image in which it is marked at least one sub-area of training pixels indicative of the at least one crack present in the portion of braking surface shown in the first training image, or identification data (or identification information) that allows the identification of at least one sub-area of training pixels indicative of the at least one crack present in said portion of braking surface shown in the first training image.

For a better training, the first training images relating to respective braking surfaces comprising at least one crack should be different from further images used to perform training validation.

The number of training images can also be increased through data augmentation techniques.

According to the present disclosure, a plurality of images relating to respective portions of a braking surface of at least one part of brake disc and not a single image relating to the entire structure of the braking surface of the at least one part of brake disc are preferably received, since the acquired images must be of sufficient quality to allow the identification of even small cracks (e.g. a few millimetres). For example, to acquire a single image of the entire braking surface of a brake disc it would be necessary to acquire the image from a greater distance. However, by acquiring the image from a greater distance, the image quality would be reduced and it would not allow cracks to be identified.

Preferably, the first supervised learning model may be a pixel segmentation model. For example, multiple deep learning models can operate in parallel (voting system) to perform segmentation at the pixel level, identifying which pixels in the image correspond to cracks. This redundancy can increase accuracy and minimize false positives.

Preferably, the method may further comprise the step of:
c) for each image in which at least one sub-area of adjacent pixels A indicative of the presence of a crack has been detected:
- determining the outline of said at least one sub-area of adjacent pixels A indicative of the presence of a crack;
- determining a length of said contour;
- verifying whether the length of the contour is greater than a comparison length;
- when/if the length of the contour is greater than the comparison length, determining that said image is an image showing a braking surface of at least one part of brake disc having at least one crack.

In other words, only the sub-areas of adjacent pixels A indicative of the presence of a crack having a contour having a length greater than a comparison length can effectively be considered cracks. The other sub-areas of adjacent pixels A indicative of the presence of a crack having a contour with a length less than the comparison length cannot actually be considered cracks and can be discarded. For example, a symbolic artificial intelligence algorithm can filter out false positives by analysing the contours of the cracks. Only cracks that meet specific length thresholds can be retained for further classifications.

Preferably, the measured length of a sub-area of adjacent pixels A indicative of the presence of a crack is a length in at least one evaluation direction of said contour or is a length indicative of the entire outer perimeter of the contour.

Preferably, the method may further comprise the steps of:
d) for each image determined to be an image showing a braking surface of at least one part of brake disc having at least one crack (or, in a further embodiment not requiring/not comprising step c, for each image in which at least one sub-area of adjacent pixels A indicative of the presence of a crack has been detected), providing said image to a second supervised learning model;
e) using said second supervised learning model:
   - detecting, in the respective image received, the presence of at least one sub-area of adjacent pixels indicative of a fixing hole of the brake disc or of an end edge of the at least one part of brake disc;
   - determining whether the sub-area of pixels indicative of a fixing hole of the at least one part of brake disc or an end edge of the at least one part of brake disc is adjacent to or superimposed on the sub-area of adjacent pixels A indicative of the presence of a crack;
   - when/if it is determined that the sub-area of pixels indicative of a fixing hole of the at least one part of brake disc or an end edge of the at least one part of brake disc is adjacent to or superimposed on the sub-area of adjacent pixels (A) indicative of the presence of a crack, determining that said received image is an image showing a braking surface of at least one part of brake disc having at least one severe crack.

In other words, it is possible to evaluate whether the cracks detected are severe/critical by verifying:
▪ Connections to the Holes: The cracks extending from the holes or that are connected to the holes are reported as critical/severe.
▪ Disc End: The cracks reaching the edge of the disc are considered as potentially critical/severe.

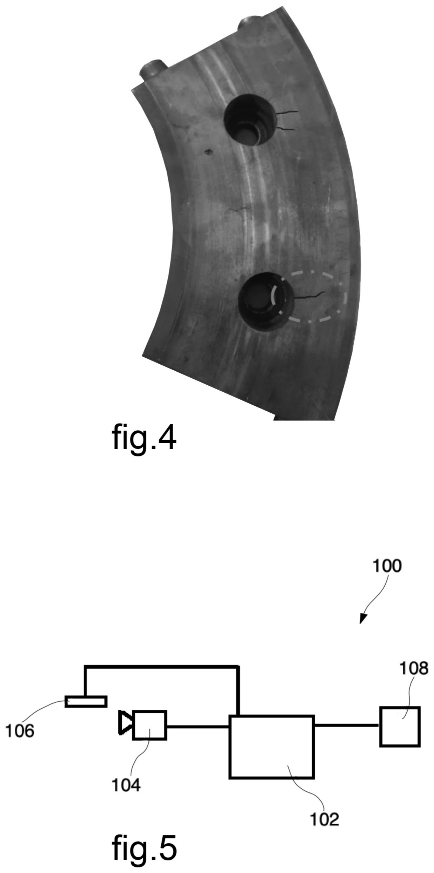

An image showing an exemplary crack reaching a fixing hole of at least one part of brake disc is illustrated in Figure 4.

Preferably, the second supervised learning model may be trained using a set of training data. Each training data may comprise:
- a third training image relating to a portion of the braking surface of at least one part of brake disc having at least one fixing hole of the at least one part of brake disc and/or at least one end edge of the at least one part of brake disc;
- a fourth training image in which it is marked at least one sub-area of training pixels indicative of the at least one fixing hole of the at least one part of brake disc and/or at least one end edge of the at least one part of brake disc present in the portion of the braking surface illustrated in the third training image, or, identification data (or identification information) that allows the identification of at least one sub-area of training pixels indicative of the at least one fixing hole of the at least one part of brake disc and/or at least one end edge of the at least one part of brake disc present in said portion of braking surface illustrated in the third training image.

For a better training, the third training images relating to braking surfaces comprising at least one fixing hole of the at least one part of brake disc and/or at least one end edge of the at least one part of brake disc may be different from further images used to perform training validation. Again, the number of training images can also be increased through data augmentation techniques.

In this way, the dedicated model can detect the holes and edges of the at least one part of brake disc in the images, ensuring the appropriate context for the identification and analysis of the cracks.

Preferably, the results emerged from the identification process, including the detected cracks and their measurements, can be reported in a structured report. The report may also provide visual and quantitative insights into the condition of the at least one part of brake disc.

In a further aspect, the present invention relates to a system for detecting a crack in at least one part of brake disc. A first embodiment of a system for detecting a crack in at least one part of brake disc is described below.

Figure 5 illustrates, by way of example, a possible embodiment of a system for detecting a crack in at least one part of brake disc.

The system 100 for detecting a crack in at least one part of brake disc comprises:
- processing means 102 arranged to perform a method for detecting a crack in at least one part of brake disc according to any one of the embodiments described above.

By way of non-limiting example, the processing means 102 may be or comprise at least one of: a control circuit, a controller, a microcontroller, a processor, a microprocessor, an FPGA, a PLC, a computer, or the like. In one embodiment, the processing means may comprise an Integrated GPU for Real-Time Analysis that allows immediate analysis of high-resolution images, reducing latency and ensuring immediate feedback for crack detection.

Preferably, the system 100 for detecting a crack in at least one part of brake disc may comprise image acquisition means 104 arranged to acquire a plurality of images relating to respective portions of a braking surface of at least one part of brake disc.

For example, the image acquisition means 104 may be or comprise a high-speed camera capable of capturing multiple sharp images per second. This can ensure that even tiny cracks (less than one millimetre) are captured clearly, despite the dynamic scanning method. The resolution and frequency of the frames of the camera can be optimized to detect fine details, allowing reliable analysis even in sub-optimal conditions.

It should also be borne in mind that, due to their shiny surfaces resulting from braking activity, the braking surfaces of the brake discs are highly reflective, which could introduce parasitic reflections in the captured images and complicate the detection of cracks. Thus, preferably, the image acquisition means may comprise a high-definition camera provided with an anti-reflective lens. The anti-reflective lens can minimize parasitic reflections in images, improving the clarity of the features acquired/captured. The lens can be adjustable, allowing the operator to fine-tune the focus and parameters to suit different vehicle configurations or environmental conditions. Although standard distance parameters and lens settings are defined, this adjustability can provide flexibility for non-standard use cases.

Preferably, the image acquisition means 104 may be associated with a recording system that may take care of capturing the images of the image acquisition means during the scanning process. This recording system can ensure that all acquired images are reliably stored for later processing.

Preferably, the system for detecting a crack may further comprise lighting means 106. For example, the lighting means may generate a light source with a specific wavelength. The light source is arranged to illuminate at least a portion of the braking surface of the brake disc of which an image (or images) is to be acquired. The lighting means can work in conjunction with the image acquisition means (e.g. the camera) to improve the quality of the acquired images, ensuring maximum extraction of the characteristics from the braking surface of the at least one part of brake disc. Lighting can be designed to mitigate ambient lighting challenges, such as shadows or inconsistent lighting of the surrounding environment, and to highlight extremely small cracks and other surface anomalies.

Preferably, the system for detecting a crack may further comprise power supply means 108 arranged to power the system to detect a crack in at least one part of brake disc (e.g. the processing means, the image acquisition means and the lighting means). For example, the power supply means may comprise one or more batteries. In this way, the processing means will also be able to guarantee uninterrupted performance during long maintenance sessions. The power supply means can be optimized in terms of portability, with the ability to operate independently in maintenance environments, without necessarily requiring external power supply sources.

Preferably, the portions of the braking surface comprised in the plurality of images acquired by the image acquisition means may be respective consecutive portions of the braking surface.

Preferably, the image acquisition means 104 may be adapted to acquire the plurality of images relating to respective portions of the braking surface of the at least one part of brake disc, until the entire braking surface of the at least one part of brake disc has been acquired by means of the plurality of acquired images.

Disadvantageously, according to the prior art, the brake discs do not have external markers that allow to identify when a complete rotation has been scanned, making it difficult to verify the completeness of the scan. For this purpose, in order to determine that the entire braking surface of a brake disc has been acquired through the plurality of acquired images, a verification based on at least one code (e.g. a QR code/ ArUco) associated with/coupled to/made on a portion of the braking surface can be performed, for example. During image acquisition, the brake disc can be rotated at a certain speed and according to a direction of rotation. The first image acquired may be that of the portion of the braking surface to/on which the code has been associated/coupled/made. By rotating the wheel, the portion of braking surface to/on which the code will have been associated/coupled/made will move and will no longer be acquired by the image acquisition means. When the acquisition means will again acquire an image of the portion of the braking surface to/on which the code has been associated/coupled/made, the image acquisition means or the processing means may determine that the brake disc has made a full 360-degree rotation and that, consequently, all the necessary portions of the braking surface have been acquired.

Preferably, metadata can be associated with each image acquired, including timestamp, rotation speed and code position (e.g. QR code/ArUco), to maintain synchronization between the captured images and the physical properties of the at least one part of brake disc.

Preferably, the electronic processing means and/or the image acquisition means and/or the lighting means and/or the power supply means may be arranged to be comprised in a portable device arranged to be couplable to a vehicle having at least one part of brake disc of which images are to be acquired.

Preferably, the portable device can be arranged to be coupled to the vehicle by means of an arm. A first end of the arm may be arranged to be coupled to the portable device and a second end of the arm may be arranged to be coupled to a gripping element arranged to be attached to the vehicle.

The arm can therefore be adjusted in multiple directions, allowing precise positioning to adapt to different vehicle configurations and ensure optimal scanning angles.

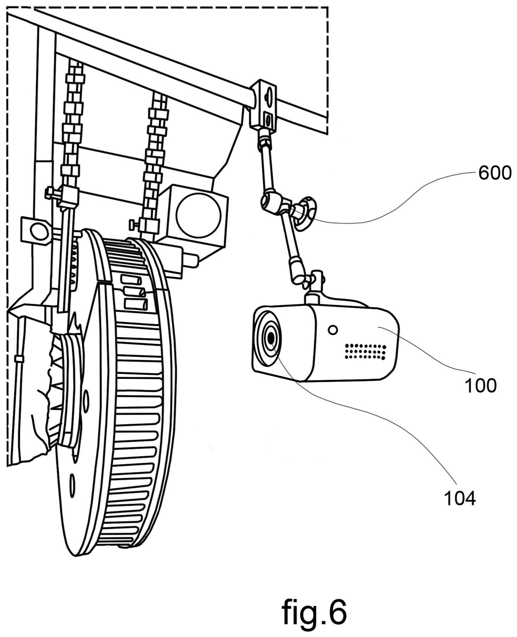

An exemplary portable device 100 to which an arm 600 for coupling to a vehicle is coupled is illustrated in Figure 6.

Since the device can be portable, it can be made in such a way that it is compact and lightweight, so that it can be transported by an operator on site and easily moved between various vehicles.

In addition, because the device can scan even just one disc at a time, the device can be quick to install, calibrate, and operate, allowing for efficient transitions between various discs to be analysed.

The system for detecting a crack in at least one part of brake disc may be modular so that the various components, e.g. the image acquisition means (e.g. the lens), the lighting means or the processing means, can be upgraded or replaced as required.

Advantageously, according to the present invention, even a maintenance operator with minimal training will be able to use the device without a thorough knowledge of optics.

By way of example, the device may comprise a 3D printed housing, in which the system for detecting a crack in a brake disc is enclosed/housed.

Such a housing may provide a lightweight and customizable form factor. The design of the housing may be such as to ensure long-term durability and resistance to harsh environments, such as railway vehicle depots.

The device can be a lightweight and easily portable device, facilitating rapid deployment by a single operator on site. Its form factor will be able to prioritize ease of use without compromising functionality.

Preferably, the system for detecting a crack in at least one part of brake disc may comprise a web server interface accessible remotely (e.g. via Wi-Fi), so as to allow operators to connect to the device using a web browser. Through the web interface, the operators can e.g. start or stop image acquisition, configure acquisition parameters (e.g. resolution, lighting intensity and recording duration) and monitor the status of the system/device. The interface can be intuitive, so as to allow operators on site to control the device without the need for specialized software, ensuring ease of use in different operating environments.

In a still further aspect, the invention relates to computer-implemented methods for training a supervised learning model.

A first computer-implemented method for training a supervised learning model comprises the step of:
- providing said supervised learning model with a set of training data, each comprising:
   - a first training image relating to a portion of braking surface of at least one part of brake disc having at least one crack;
   - a second training image in which it is marked at least one sub-area of training pixels indicative of the at least one crack present in the portion of braking surface shown in the first training image, or identification data (or identification information) that allows the identification of at least one sub-area of training pixels indicative of the at least one crack present in said portion of braking surface shown in the first training image.

A second computer-implemented method for training a supervised learning model comprises the step of:
- providing said supervised learning model with a set of training data, each comprising:
   - a first training image relating to a portion of braking surface of at least one part of brake disc having at least one fixing hole of the brake disc and/or at least one end edge of the at least one part of the brake disc;
   - a second training image in which it is marked at least one sub-area of training pixels indicative of at least one fixing hole of the at least one part of brake disc and/or at least one end edge of the at least one part of brake disc present in the portion of the braking surface illustrated in the first training image, or, identification data (or identification information) that allows the identification of at least one sub-area of training pixels indicative of the at least one fixing hole of the at least one part of brake disc and/or at least one end edge of the at least one part of brake disc present in said portion of braking surface shown in the first training image.

Preferably, for example, the present invention can be applied to brake discs for railway vehicles.

Terms such as "process", "calculate" or "determine" refer to the operations performed by the processing means (e.g. a control circuit), which may include computer systems or electronic devices that manipulate data represented as physical (electronic) quantities within memories or registers. One or more components may be described as "configured for", "configurable for", "operable/operational for", "adapted/adaptable for", "arranged for" or similar terms. Unless explicitly stated, these terms comprise both active and inactive components. Unless otherwise specified, terms such as "including" or "having" shall be construed as open-ended terms (i.e. "including but not limited to"). Numerical indications generally refer to "at least" the number indicated, and disjunctive terms such as "A or B" should be interpreted as including one or both, unless explicitly specified. The operations contained in a claim may be performed in any order, unless explicitly stated. The expression "at least one of A, B and C" may be interpreted as any combination of A, B and C, such as A alone, B alone, C alone, A and B together, A and C together, B and C together and/or A, B and C together. The phrase "at least one of A, B or C" may be interpreted as a combination of A, B, C, A and B, A and C, B and C and/or A, B and C together.

The present written description may disclose various embodiments of the invention, including the best mode, and may enable a person of ordinary skill in the art to put the embodiments of the invention into practice, including making and using any device or system and performing any incorporated process. The scope of patentability of the invention is defined by the claims and may include other embodiments which may be performed by a person of ordinary skill in the art. Such other embodiments may be understood as falling within the scope of application of the claims if they may have structural elements that do not differ from the literal language of the claims, or if they may include equivalent structural elements with non-substantial differences from the literal language of the claims.

Various aspects and embodiments of a method for detecting a crack in at least one part of brake disc, a system for detecting a crack in at least one part of brake disc, and computer-implemented methods for training a supervised learning model according to the invention have been described. It is intended that each embodiment may be combined with any other embodiment. The invention, moreover, is not limited to the described embodiments, but may be varied within the scope defined by the appended claims.

## Claims

1. Method for detecting a crack in at least one part of brake disc, comprising the steps of:
a) receiving a plurality of images relating to respective portions of a braking surface of at least one part of brake disc;
b) for each image of said plurality of images, using a first supervised learning model, detecting the presence of at least one sub-area of adjacent pixels (A) indicative of the presence of a crack;
wherein said first supervised learning model is trained using a set of training data each comprising:
- a first training image relating to a portion of braking surface of at least one part of brake disc having at least one crack;
- a second training image in which it is marked at least one sub-area of training pixels indicative of the at least one crack present in the portion of braking surface illustrated in the first training image, or, identification data that allows the identification of at least one sub-area of training pixels indicative of the at least one crack in said portion of braking surface illustrated in the first training image.

2. mMethod according to claim 1, further comprising the steps of:
c) for each image in which at least one sub-area of adjacent pixels (A) indicative of the presence of a crack has been detected:
• determine the outline of said at least one sub-area of adjacent pixels (A) indicative of the presence of a crack;
• determine a length of said contour;
• verify whether the length of the contour is greater than a comparison length;
• if the length of the contour is greater than the comparison length, determine that said image is an image showing a braking surface of at least one part of brake disc having at least one crack.

3. Method according to claim 2, wherein said contour length of at least one sub-area of adjacent pixels (A) indicative of the presence of a crack is a length in at least one evaluation direction of said contour or is a length indicative of the entire outer perimeter of the contour.

4. Method according to any of claims 2 or 3, further comprising the steps of:
d) for each image determined to be an image showing a braking surface of at least part of brake disc having at least one crack, providing said image to a second supervised learning model;
e) using said second supervised learning model:
• detecting, in the respective image received, the presence of at least one sub-area of adjacent pixels indicative of a fixing hole of the at least one part of brake disc or of an end edge of the at least one part of brake disc;
• determining whether the sub-area of pixels indicative of a fixing hole of the at least one part of brake disc or an end edge of the at least one part of brake disc is adjacent to or superimposed on the sub-area of adjacent pixels (A) indicative of the presence of a crack;
• when it is determined that the sub-area of pixels indicative of a fixing hole of the at least one part of brake disc or an end edge of the at least one part of brake disc is adjacent to or superimposed on the sub-area of adjacent pixels (A) indicative of the presence of a crack, determining that said received image is an image showing a braking surface of at least one part of brake disc having at least one severe crack;
wherein said second supervised learning model is trained using a set of training data each comprising:
- a third training image relating to a portion of the braking surface of at least one part of brake disc having at least one fixing hole of the at least one part of brake disc and/or at least one end edge of the at least one part of brake disc;
- a fourth training image in which is marked at least one sub-area of training pixels indicative of the at least one fixing hole of the at least one part of brake disc and/or at least one end edge of the at least one part of brake disc present in the portion of the braking surface illustrated in the third training image, or, identification data that allows the identification of at least one sub-area of training pixels indicative of the at least one fixing hole of the at least one part of brake disc and/or at least one end edge of the at least one part of brake disc present in said portion of braking surface illustrated in the third training image.

5. Method according to any of the preceding claims, wherein said first supervised learning model is a pixel segmentation model.

6. System (100) for detecting a crack in at least one part of brake disc, comprising:
- processing means (102) arranged to perform a method for detecting a crack in at least one part of brake disc according to any of the preceding claims.

7. System (100) according to claim 6, further comprising at least one of:
- image acquisition means (104) arranged to acquire a plurality of images relating to respective portions of a braking surface of at least one part of brake disc;
- lighting means (106) arranged to generate a light source arranged to illuminate at least a portion of the braking surface of the at least one part of brake disc of which an image is to be acquired;
- electrical power supply means (108) arranged to power the system to detect a crack in at least one part of brake disc.

8. System (100) as claimed in claim 7, wherein said portions of the braking surface comprised in the plurality of images acquired by the image acquisition means are respective consecutive portions of the braking surface.

9. System (100) according to claim 7 or 8, wherein said image acquisition means are adapted to acquire said plurality of images relating to respective portions of the braking surface of the at least one part of brake disc, until the entire braking surface of the at least one part of brake disc has been acquired by means of said plurality of acquired images.

10. System (100) according to any one of claims 7 to 9, wherein the electronic processing means and/or the image acquisition means and/or the lighting means and/or the power supply means are arranged to be comprised in a portable device arranged to be coupled to a vehicle having at least one part of brake disc of which the images are to be acquired.

11. System (100) according to claim 10, wherein said portable device is arranged to be coupled to the vehicle by means of an arm;
wherein a first end of the arm is arranged to be coupled to the portable device and a second end of the arm is arranged to be coupled to a gripping element arranged to be attached to the vehicle.

12. System (100) according to any one of claims 7 to 11, wherein said image acquisition means (104) comprises a high definition camera equipped with an anti-reflective lens.

13. Computer-implemented method for training a supervised learning model, wherein the method comprises the step of providing said supervised learning model with a set of training data, each comprising:
- a first training image relating to a portion of braking surface of at least one part of brake disc having at least one crack;
- a second training image in which it is marked at least one sub-area of training pixels indicative of the at least one crack present in the portion of braking surface shown in the first training image, or identification data that allows the identification of at least one sub-area of training pixels indicative of the at least one crack in said portion of braking surface shown in the first training image.

14. Computer-implemented method for training a supervised learning model, wherein the method comprises the step of providing said supervised learning model with a set of training data, each comprising:
- a first training image relating to a portion of braking surface of at least one part of brake disc having at least one fixing hole of the brake disc and/or at least one end edge of the at least one part of the brake disc;
- a second training image in which it is marked at least one sub-area of training pixels indicative of at least one fixing hole of the at least one part of brake disc and/or at least one end edge of the at least one part of brake disc present in the portion of the braking surface illustrated in the first training image, or, identification data that allows the identification of at least one sub-area of training pixels indicative of at least one fixing hole of the at least one part of brake disc and/or at least one end edge of the at least one part of brake disc in said portion of braking surface shown in the first training image.
